(19) Europäisches Patentamt
European Patent Office
Office européen des brevets

(11) Veröffentlichungsnummer: **0 029 137**
**B1**

(12) # EUROPÄISCHE PATENTSCHRIFT

(45) Veröffentlichungstag der Patentschrift: **22.02.84**

(51) Int. Cl.³: **C 09 C 1/36**, C 09 C 3/08, C 09 C 3/12

(21) Anmeldenummer: **80106568.1**

(22) Anmeldetag: **25.10.80**

(54) **Titandioxyd-Pigmente mit guter Dispergierbarkeit, Verfahren zu ihrer Herstellung und ihre Verwendung.**

(30) Priorität: **17.11.79 DE 2946549**

(43) Veröffentlichungstag der Anmeldung: **27.05.81 Patentblatt 81/21**

(45) Bekanntmachung des Hinweises auf die Patenterteilung: **22.02.84 Patentblatt 84/8**

(84) Benannte Vertragsstaaten: **DE FR GB IT**

(56) Entgegenhaltungen:
**EP-A-0 021 262**
**EP-A-0 022 187**
**FR-A-1 387 487**
**FR-A-2 038 894**
**FR-A-2 045 426**
**GB-A-1 442 756**
**US-A-3 172 772**

(73) Patentinhaber: **BAYER AG, Zentralbereich Patente, Marken und Lizenzen, D-5090 Leverkusen 1, Bayerwerk (DE)**

(72) Erfinder: **Köhler, Klaus, Dr., Friedrich-Ebert-Strasse 299, D-4150 Krefeld (DE)**
Erfinder: **Woditsch, Peter, Dr., Deswatinesstrasse 83, D-4150 Krefeld (DE)**
Erfinder: **Rieck, Hilmar, Dr., Dörperhofstrasse 15, D-4150 Krefeld (DE)**
Erfinder: **Rodi, Fritz, Dr., Schwarzer Weg 41, D-4130 Moers 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

# Titandioxyd-Pigmente mit guter Dispergierbarkeit, Verfahren zu ihrer Herstellung und ihre Verwendung

Gegenstand der vorliegenden Erfindung sind anorganisch nachbehandelte $TiO_2$-Pigmente mit einer Beschichtung aus hydrophobierenden und hydrophilierenden organischen Substanzen, die mehr als 95 Gew.-% $TiO_2$ enthalten, einen Glühverlust von weniger als 0,8% (nach Abzug des Kohlenstoffgehaltes) aufweisen, mit einem Grindometerwert von kleiner als 30, entsprechend einem Wert von größer als 5,6 auf der Hegman-Skala.

Die erfindungsgemäßen Pigmente zeichnen sich durch eine sehr gute Dispergierbarkeit aus und können zur Pigmentierung von Lacken, Kunststoffen und Papier verwendet werden.

Ein wichtiges Qualitätsmerkmal hochwertiger Pigmente ist die Dispergierbarkeit. Gut dispergierbare Pigmente zeichnen sich dadurch aus, daß sie in kurzer Zeit und mit geringem Energieaufwand in dem zu pigmentierenden Medium gleichmäßig verteilt werden können. Besonders hohe Anforderungen an die Dispergierbarkeit von Pigmenten werden bei der Herstellung von Lacken mittels schnellaufender Rühraggregate, den sogenannten Dissolvern, gestellt. Bei der Dissolverdispergierung wird das Pigmentpulver durch die Einwirkung von relativ geringen Scherkräften im Bindemittel verteilt und man erhält nur dann stippenfreie und hochglänzende Lacke, d. h. Lacke, die keine oder nur geringfügige Zusammenballungen von Pigmentprimärteilchen enthalten, wenn die in jedem Pigmentpulver vorhandenen Agglomerate leicht zerteilbar sind.

Es ist demnach ein besonderes Ziel vorliegender Erfindung, leicht zerteilbare Pigmente für Lackbindemittel zu schaffen, so daß man die technischen und wirtschaftlichen Vorteile der in zunehmendem Maß bei der Lackherstellung verwendeten Dissolver optimal nutzen kann.

Kennzeichnende Maßnahme vieler Patentschriften zur Erreichung dieses Ziels ist die Nachbehandlung von gegebenenfalls vorgemahlenen $TiO_2$-Pigmenten in wäßriger Suspension durch Auffällung von Metalloxiden, -hydroxiden und/oder -phosphaten. Nach Auswaschen der bei der Fällung entstehenden wasserlöslichen Salze und einer nachfolgenden Trocknung schließt meistens eine Mahlung den Herstellungsprozeß ab. Die Mahlung wird in Stift-, Kugel- oder Pendelmühlen vorgenommen. Für besonders hochwertige Pigmente werden als Mahlaggregate Luftstrahl- oder Dampfstrahlmühlen eingesetzt, wobei die nachbehandelte Pigmentoberfläche mit organischen Hilfsstoffen vor oder während der Mikronisierung behandelt wird. Ein Nachteil dieser Verfahrensweise besteht darin, daß der Nachbehandlungsprozeß technisch sehr aufwendig und zeitraubend ist und insbesondere wegen der vor der Mahlung notwendigen Trocknung einen hohen Energieaufwand erfordert.

Es wäre demnach wünschenswert, diese Nachteile zumindest partiell zu beseitigen und trotzdem Pigmente mit guten Dispergiereigenschaften zu erhalten.

Überraschenderweise wurden nun $TiO_2$-Pigmente gefunden, die diesen Vorstellungen entsprechen. Es handelt sich dabei um $TiO_2$-Pigmente mit einer gemeinsamen Beschichtung aus hydrophobierenden und hydrophilierenden organischen Substanzen mit einem Grindometerwert von kleiner als 30, entsprechend einem Wert von größer als 5,6 auf der Hegman-Skala wobei nur ein Anteil von 1–40 Gew.-%, vorzugsweise 5–30 Gew.-%, des organisch beschichteten Pigments aus anorganisch nachbehandeltem Pigment besteht, die $TiO_2$-Pigmente mehr als 95 Gew.-% $TiO_2$ enthalten und einen Glühverlust von weniger als 0,8% (nach Abzug des Kohlenstoffgehaltes) aufweisen.

Diese $TiO_2$-Pigmente mit guter Dispergierbarkeit werden hergestellt durch gemeinsame Mikronisierung eines anorganisch nachbehandelten $TiO_2$-Pigmentes in Mengen von 1–40 Gew.-%, vorzugsweise 5–30 Gew.-%, bezogen auf die Gesamtmenge des $TiO_2$-Pigments, mit einem unbehandelten $TiO_2$-Pigment und Zugabe von hydrophobierenden und hydrophilierenden organischen Substanzen in Mengen von 0,3 bis 5 Gew.-%, vorzugsweise 0,5–1,5 Gew.-%, bezogen auf das Gewicht des Pigmentes, vor oder während der Mikronisierung.

Die vorliegende Erfindung beinhaltet auch ein Verfahren zur Herstellung der beschriebenen $TiO_2$-Pigmente, das dadurch gekennzeichnet ist, daß ein $TiO_2$-Pigment ohne anorganisch-chemische Nachbehandlung mit einem anorganisch nachbehandelten $TiO_2$-Pigment gemeinsam mikronisiert wird und hydrophobierende und hydrophilierende Substanzen vor oder während der Mikronisierung zugesetzt werden.

Gemäß der Erfindung wird das anorganisch nicht nachbehandelte $TiO_2$-Pigment zusammen mit dem nachbehandelten $TiO_2$-Pigment mikronisiert. In einer bevorzugten Ausführungsform wird das nachbehandelte dem unbehandelten Pigment vor der Mikronisierung trocken zugemischt. Es ist jedoch auch denkbar, mittels einer geeigneten Vorrichtung die beiden Pigmente gleichzeitig in die Strahlmühle einzubringen, ohne einen vorherigen Mischprozeß durchzuführen. Falls eine Vermischung vorgenommen wird, kann dies in allen für die die Vermengung von Feststoffen geeigneten Apparaten durchgeführt werden, z. B. in Mischtrommeln, Schnecken etc. Zur Herstellung der erfindungsgemäßen Pigmente mittels des erfindungsgemäßen Verfahrens eignen sich alle unbehandelten Pigmenttypen, wenn sie in fester Form vorliegen, gleichgültig, nach welchem Verfahren sie hergestellt wurden.

Bevorzugt werden nach dem sogenannten Sulfatverfahren hergestellte $TiO_2$-Ofenklinker, die, um die besondere Wirtschaftlichkeit des erfindungsgemäßen Verfahrens sicherzustellen, ohne spezielle

vorherige Zerkleinerungsmaßnahmen mit dem nachbehandelten $TiO_2$-Pigment vermischt werden und dann einer Mikronisierung zugeführt werden.

Genauso können aber auch nach dem Chloridverfahren gewonnene $TiO_2$-Pigmente erfindungsgemäß eingesetzt werden.

Die bevorzugte Form des Verfahrens zur Herstellung der $TiO_2$-Pigmente besteht darin, daß nur 1 bis 40 Gew.-%, bevorzugt 5 bis 30 Gew.-%, anorganisch nachbehandelte $TiO_2$-Pigmente für die erfindungsgemäßen $TiO_2$-Pigmentmischungen benötigt werden, wobei das anorganisch nachbehandelte $TiO_2$-Pigment ein mit 1 bis 20 Gew.-%, vorzugsweise 3 bis 15 Gew.-%, bezogen auf $TiO_2$, an anorganischen Metalloxiden, -hydroxiden und/oder -phosphaten nachbehandeltes $TiO_2$-Pigment ist. Eine weitere bevorzugte Ausführung des erfindungsgemäßen Verfahrens besteht darin, daß die Gesamtmenge der hydrophobierenden und hydrophilierenden organischen Verbindungen 0,3 bis 5 Gew.-%, vorzugsweise 0,5 bis 1,5 Gew.-%, bezogen auf das Gewicht des Pigments, beträgt.

Vorzugsweise handelt es sich bei den hydrophobierenden organischen Hilfsstoffen um siliciumorganische und/oder um phosphororganische Verbindungen. Mit der Bezeichnung »hydrophobierend« ist nicht gemeint, daß der an sich hydrophilen Oberfläche von oxidischen Pigmenten notwendigerweise hydrophober Charakter verliehen wird, wenn entsprechend dem erfindungsgemäßen Verfahren vorgegangen wird. Es bezeichnet lediglich das charakteristische Merkmal dieser Verbindungen, daß sie in genügend hoher Menge auf die Pigmentoberfläche aufgebracht, dieser ein hydrophobes Erscheinungsbild verleihen können.

Als besonders geeignete siliciumorganische Verbindungen haben sich Polysiloxane erwiesen. Diese können kettenförmige, verzweigte oder cyclische Polysiloxane sein, in denen folgende Bausteine in gegebenenfalls wechselnder Anordnung auftreten können:

$$[R_2R'-SiO_{1/2}]\ [RR''-SiO]\ [R-SiO_{3/2}]\ [SiO_2],$$

wobei R ein Alkyl-, Cycloalkyl-, Aryl- oder Alkenyl-Rest sein kann, R′ gleich R sowie OH, R″ gleich R oder H sein kann, die Anzahl der Si-Atome größer als 5 ist.

Dies sind z. B. $[SiMe_3]$-endgestoppte lineare Polyhydrogenmethylsiloxane, bevorzugt mit Kettenlängen von durchschnittlich 10 bis 50 [SiHMeO]-Einheiten. Geeignet sind auch teilweise hydrierte Polysiloxane des beschriebenen Typs, bevorzugt mit 5 [SiHMeO]- sowie 5 $[SiMe_2O]$-Einheiten. Besonders bevorzugt sind auch $[SiHMe_2]$-endgestoppte Polyvinylhydrogenmethylsiloxane, besonders bevorzugt mit 5 [SiHMeO]- und 3 $[Si(CH=CH_2)MeO]$-Einheiten. Eine weitere bevorzugte Verbindungsklasse stellen verzweigte Polyhydrogensiloxane dar, so z. B. ein $[SiHMe_2]$-endgestopptes einfachverzweigtes permethyliertes Polysiloxan mit 9 $[SiMe_2O]$-Einheiten.

Weiterhin sind geeignet Polysiloxane mit endständigen OH-Gruppen, wie sie erhältlich sind als definierte Fraktionen der Hydrolysate von z. B. Dimethyldichlorsilan; Dimethyldichlorsilan und Methyltrichlorsilan; Dimethyldichlorsilan und Siliciumtetrachlorid; Vinylmethyldichlorsilan; Vinylmethyldichlorsilan und Dimethyldichlorsilan, Cyclohexylmethyldichlorsilan und Dimethyldichlorsilan; usw. Auch Kondensationsprodukte des Diphenylsilandiols sind geeignet.

Besonders geeignet sind z. B. lineare Polymethylsiloxane mit SiOH-Endstoppung mit einem mittleren Molekulargewicht von 490, wobei die Viskosität 27 cP ($27 \cdot 10^{-3}$ Pa · s) beträgt sowie lineare Polyvinylmethylsiloxane mit SiOH-Endstoppung, einem [meSiviO]-Anteil von 5%, einem [SiOH]-Anteil von 18,2% und einer Viskosität von 25,5 cP. Ebenso geeignet sind auch verzweigte Polymethylsiloxane mit SiOH-Endstoppung mit einem mittleren Molekulargewicht von 545, wobei die Viskosität 110 cP beträgt sowie verzweigte Polyvinylmethylsiloxane mit SiOH-Endstoppung, einem (meSiviO]-Anteil an 5%, einem [SiOH]-Anteil von 15,2% und einer Viskosität von 96 cP.

Ebenfalls besonders günstig ist die Verwendung von Phosphorsäure-diestern der Formel

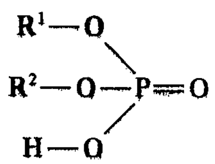

als hydrophobierende organische Substanzen. Dabei bedeuten $R^1$ und $R^2$ gleiche oder verschiedene Alkyl-, Aryl-, Cycloalkyl- und/oder Alkenylreste.

Besonders bevorzugte hydrophilierende organische Verbindungen sind Trialkanolamine, z. B. Triethanolamin, Tripropanolamin und/oder Tri-Isopropanolamin.

Die Tatsache, daß für die erfindungsgemäßen Pigmente nur relativ kleine Mengen nachbehandelter Pigmente benötigt werden, macht deutlich, daß das erfindungsgemäße Verfahren auf überaus einfache und kostengünstige Art und Weise die Herstellung von leicht dispergierbaren $TiO_2$-Pigmenten erlaubt, die zum überwiegenden Teil aus anorganisch unbehandelten $TiO_2$-Pigmenten bestehen.

Pigmente, wie sie aus der FR-A-2 038 894 oder 1 387 387 sind, weisen nicht die kombinierte Nachbehandlung auf. Um auf vergleichbar gute pigmenttechnische Daten zu kommen, benötigt man

für deren Herstellung einen unvergleichbar höheren wirtschaftlichen Aufwand.

Da bei den erfindungsgemäßen Pigmenten aber nur ein Bruchteil des mikronisierten Endproduktes der technisch aufwendigen und zeitraubenden anorganischen Nachbehandlung unterworfen wird, reduziert sich vor allem der durch die Trocknung nachbehandelter Produkte hohe Energieaufwand. Trotzdem erhält man Pigmente, die sich hinsichtlich Dispergierbarkeit nicht von nachbehandelten $TiO_2$-Pigmenten unterscheiden.

Das Verhältnis der zugegebenen hydrophobierenden und hydrophilierenden organischen Substanzen während oder bei der Mikronisierung kann in weiten Grenzen variiert werden. Für die Pigmentierung von Lackbindemitteln, die im folgenden am Beispiel der Dissolver-Dispergierung in einem Alkydharz die leichte Dispergierbarkeit der erfindungsgemäßen Pigmente zeigen soll, wird bei Verwendung von Polysiloxanen ein Verhältnis hydrophobierender zu hydrophilierender Komponente zwischen 1 : 2 und 1 : 5 bevorzugt, bei Verwendung von Phosphorsäurediestern ist ein Bereich zwischen 3 : 1 und 1 : 3 bevorzugt.

Für die Pigmentierung anderer Systeme werden gegebenenfalls andere Verhältnisse gewählt, um optimale Ergebnisse zu erhalten.

Es ist bekannt, daß das bloße Zusammenmischen der erfindungsgemäß verwendeten Ausgangsprodukte, selbst wenn das unbehandelte und das anorganisch nachbehandelte $TiO_2$-Pigment beide in mikronisierter Form vorliegen, nicht zu den gewünschten Produkten mit guter Dispergierbarkeit führt.

Die erfindungsgemäßen $TiO_2$-Pigmente hingegen, zu deren Herstellung nur ein kleiner Teil von mit üblichen Mengen anorganisch nachbehandeltes $TiO_2$-Pigment benötigt wird, weisen die Dispergierbarkeit eines nachbehandelten $TiO_2$-Pigmentes auf.

Die erfindungsgemäßen $TiO_2$-Pigmente sind besonders geeignet zur Pigmentierung von Lacken, Kunststoffen und Papier.

Die Dispergierbarkeit der $TiO_2$-Pigmente wird nach den nachfolgend beschriebenen Vorschriften geprüft. Zur Feststellung der Dispergierbarkeit in Lackbindemitteln wird das Pigment mittels eines Dissolvers dispergiert. Die Dispergierung erfolgt in einem hochviskosen Bindemittel-Lösungsgemisch von 60% Alkydharz (Fettsäure-modifiziertes Alkydharz, Öllänge 26) in Xylol unter folgenden Bedingungen:

100 g des Alkydharzes (60%ig in Xylol) werden in eine 250 ml Weißblechdruckdeckeldose von 74 mm Durchmesser eingewogen. Unter Rühren mit dem Dissolver (Scheibendurchmesser 40 mm, Abstand vom Rührgefäßboden 20 mm) werden bei 500 – 1600 U/min 140 g $TiO_2$-Pigment langsam eingestreut. Nach Abstreifen des Dosenrandes und des Rührers, um nicht benetzte Pigmentanteile mit dem Mahlgut zu vereinen, wird 5 Minuten bei 5000 U/min dispergiert.

## Prüfung auf Überkorn (Stippen)

138,5 g Pigmentpaste werden in einem Kunststoffbecher mit 20 g Kristallöl 60/Xylol (1 : 1) verdünnt, per Hand sofort gut umgerührt und anschließend mit einem Grindometer (DIN 53 203) die Körnigkeit bestimmt.

## Glanzgebung

25 g Pigmentpaste werden in einem Kunststoffbecher mit 8,5 g Alkydharz (60% in Xylol) aufgelackt und mit weiteren 10 g Xylol verdünnt. Der Lack wird anschließend mit einem Filmzieher mit 60 µm Spaltbreite auf Glasplatten aufgezogen. Man läßt 2 Stunden bei Raumtemperatur trocknen und mißt mit einem Glanzmeßgerät den Glanz unter einem Winkel von 20°.

## Stoffcharakterisierung

Die beispielhaften Pigmente werden durch ihren $TiO_2$-Gehalt sowie den Glühverlust (3 Stunden bei 900° C) abzüglich des ermittelten C-Gehaltes charakterisiert. Der Trockenverlust wird nach DIN 53 198 bestimmt.

Nachfolgend werden die erfindungsgemäßen Pigmente und ihre erfindungsgemäße Herstellung beispielhaft beschrieben:

## Beispiel 1

Ein nach dem sogenannten Sulfat-Verfahren in üblicher Weise hergestellter Rutil-$TiO_2$-Ofenklinker wird mit 15 Gew.-%, bezogen auf die Gesamtmenge eines nach bekannten Verfahren mit 0,8% $SiO_2$ und 2,5% $Al_2O_3$ nachbehandelten und getrockneten $TiO_2$-Pigments in einer Trommel kurz vermengt.

Man besprüht die Mischung mit 0,25 Gew.-%, bezogen auf das Gewicht der Mischung, eines $\alpha,\omega$-Polysiloxandiolgemisches mit einem mittleren Molekulargewicht von 490, wobei die Viskosität 27 cP ($27 \cdot 10^{-3}$ Pa · s) beträgt, und 0,75 Gew.-% Triethanolamin, worauf das Produkt in einer Dampfstrahlmühle mikronisiert wird. Das Produkt ist von sehr guter Dispergierqualität (s. Tabelle 1).

Analyse:
$TiO_2$ 96,9%; Glühverlust 0,6%; C 0,19%; Glühverlust – C 0,41%; Trockenverlust 0,07%.

Vergleichsbeispiel A

Das Beispiel dient dazu, um zu zeigen, daß ein nicht anorganisch nachbehandeltes $TiO_2$-Pigment, wenn es in bekannter Weise in Anwesenheit organischer Hilfsstoffe, wie z. B. Triethanolamin, mikronisiert wird, von minderer Dispergierqualität ist. Der bereits im Beispiel 1 verwendete Rutil-$TiO_2$-Ofenklinker wird mit 1 Gew.-% Triethanolamin besprüht und entsprechend Beispiel 1 mikronisiert. Aus Tabelle 1 geht hervor, daß das Pigment als schlecht dispergierbar einzustufen ist.

Vergleichsbeispiel B

Das Beispiel soll zeigen, daß es auch mit Polysiloxanen, die ebenfalls in der Literatur als Hilfsmittel zur Verbesserung der Dispergierbarkeit von $TiO_2$-Pigmenten genannt werden, nicht möglich ist, ein unbehandeltes $TiO_2$-Pigment mit guter Dissolver-Dispergierbarkeit herzustellen. Ein Ofenklinker entsprechend Beispiel 1 wird mit 1 Gew.-% eines Polymethylhydrogensiloxans der durchschnittlichen Bruttoformel

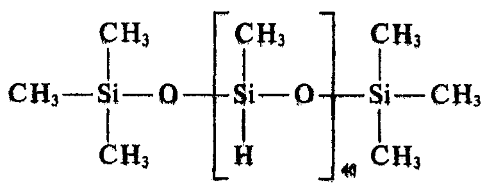

besprüht und entsprechend Beispiel 1 mikronisiert. Das resultierende Pigment ist schlecht dispergierbar (vgl. Tabelle 1).

Vergleichsbeispiel C

Ein handelsübliches nicht anorganisch nachbehandeltes $TiO_2$-Pigment wird auf seine Dissolverdispergierbarkeit hin überprüft. Es zeigt sich, daß das Produkt überaus schlecht dispergierbar ist (vgl. Tabelle 1).

Vergleichsbeispiele D und E

Zwei handelsübliche nachbehandelte $TiO_2$-Pigmente werden den gleichen Prüfbedingungen unterworfen. Sie sind beide gut dispergierbar (vgl. Tabelle 1). Damit soll verdeutlicht werden, welche Dispergierqualität nachbehandelte $TiO_2$-Pigmente erreichen und daß die erfindungsgemäßen Pigmente dieser Qualität entsprechen.

Analyse für D:
$TiO_2$ 93,1%; Glühverlust 1,24%; C 0,26%; Glühverlust – C 0,98%; Trockenverlust 0,17%.

Analyse für E:
$TiO_2$ 95,9%; Glühverlust 1,13%; C 0,20%; Glühverlust – C 0,93%; Trockenverlust 0,15%.

Beispiel 2

Ein $TiO_2$-Ofenklinker entsprechend Beispiel 1 wird mit 20 Gew.-% des in Beispiel 1 verwendeten nachbehandelten und getrockneten $TiO_2$-Pigments vermengt und mit 0,2 Gew.-% eines

Polymethylhydrogensiloxans der durchschnittlichen Bruttoformel

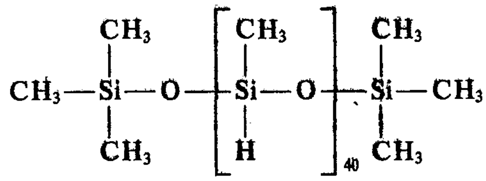

und 0,4 Gew.-% Triethanolamin besprüht. Nach Mikronisierung entsprechend Beispiel 1 erhält man ein Pigment mit guter Dissolverdispergierbarkeit (vgl. Tabelle 1).

Analyse:
$TiO_2$ 97,2%; Glühverlust 0,7%; C 0,20%; Glühverlust – C 0,5%; Trockenverlust 0,05%.

## Beispiel 3

Ein $TiO_2$-Ofenklinker entsprechend Beispiel 1 wird mit 15 Gew.-% eines nach bekannten Verfahren mit 9,5 Gew.-% $SiO_2$ und 4 Gew.-% $Al_2O_3$ nachbehandelten und getrockneten $TiO_2$-Pigments vermengt, dann mit 0,25 Gew.-% eines $\alpha,\omega$-Polysiloxandiolgemisches mit einem mittleren Molekulargewicht von 490, wobei die Viskosität 27 cP ($27 \cdot 10^{-3}$ Pa · s) beträgt, und 0,75% Triethanolamin besprüht und entsprechend Beispiel 1 mikronisiert. Das Produkt ist sehr gut dispergierbar (vgl. Tabelle 1).

Analyse:
$TiO_2$ 95,6%; Glühverlust 1,07%; C 0,35%; Glühverlust – C 0,72%; Trockenverlust 0,06%.

## Beispiel 4

Man verfährt entsprechend Beispiel 3, mit dem Unterschied, daß das nachbehandelte Produkt in mikronisierter Form vorliegt. Das Pigment ist leicht mit dem Dissolver dispergierbar (vgl. Tabelle 1).

Analyse:
$TiO_2$ 95,6%; Glühverlust 0,89%; C 0,36%; Glühverlust – C 0,53%; Trockenverlust 0,1%.

## Beispiel 5

Man verfährt entsprechend Beispiel 4, mit dem Unterschied, daß mit 0,2 Gew.-% der siliciumorganischen Verbindung und mit 0,4 Gew.-% Triethanolamin besprüht wird. Das Pigment ist, wie aus Tabelle 1 hervorgeht leicht dispergierbar.

Analyse:
$TiO_2$ 95,8%; Glühverlust 0,81%; C 0,23%; Glühverlust – C 0,58%; Trockenverlust 0,1%.

## Beispiel 6

Man verfährt entsprechend Beispiel 3, mit dem Unterschied, daß nur 10 Gew.-% des nachbehandelten und getrockneten $TiO_2$-Pigments zugemischt werden und als organische Hilfsstoffe 0,67 Gew.-% Di-2-ethyl-hexylphosphat und 0,33 Gew.-% Triethanolamin aufgesprüht werden. Nach der Mikronisierung wird ein leicht dispergierbares Pigment erhalten (vgl. Tabelle 1).

Analyse:
$TiO_2$ 96,1%; Glühverlust 1,02%; C 0,50%; Glühverlust – C 0,52%; Trockenverlust 0,09%.

## Beispiel 7

Man verfährt entsprechend Beispiel 3, mit dem Unterschied, daß als organische Hilfsstoffe 0,5 Gew.-% Di-2-ethyl-hexylphosphat und 0,5 Gew.-% Triethanolamin aufgesprüht werden. Das nach der Mikronisierung vorliegende Pigment ist leicht dispergierbar (vgl. Tabelle 1).

Analyse:
$TiO_2$ 95,6%; Glühverlust 1,11%; C 0,49; Glühverlust – C 0,62%; Trockenverlust 0,13%.

Beispiel 8

Ein $TiO_2$-Ofenklinker entsprechend Beispiel 1 wird mit 15 Gew.-% eines nach bekannten Verfahren mit 3,0 Gew.-% $Al_2O_3$ nachbehandelten und getrockneten $TiO_2$-Pigments vermengt, dann mit 0,25 Gew.-% eines $\alpha,\omega$-Polysiloxandiolgemisches mit einem mittleren Molekulargewicht von 490, wobei die Viskosität 27 cP ($27 \cdot 10^{-3}$ Pa · s) beträgt, und 0,75 Gew.-% Triisopropanolamin besprüht und entsprechend Beispiel 1 mikronisiert. Das Produkt ist leicht dispergierbar (vgl. Tabelle 1).

Analyse:
$TiO_2$ 97,2%; Glühverlust 0,47%; C 0,17%; Glühverlust – C 0,30%; Trockenverlust 0,06%.

Beispiel 9

Man verfährt entsprechend Beispiel 8 mit dem Unterschied, daß 30% des nachbehandelten Produkts zugesetzt werden und mit 0,18 Gew.-% der siliciumorganischen Verbindung und 0,54 Gew.-% Triisopropanolamin besprüht wird (vgl. Tabelle 1).

Analyse:
$TiO_2$ 96,9%; Glühverlust 0,56%; C 0,22%; Glühverlust – C 0,34%; Trockenverlust 0,05%.

Beispiel 10

Ein $TiO_2$-Ofenklinker entsprechend Beispiel 1 wird mit 15 Gew.-% des mit $SiO_2$ und $Al_2O_3$ nachbehandelten $TiO_2$-Pigments des Beispieles 1 vermischt, mit 0,67 Gew.-% Dibutylphosphat und 0,33 Gew.-% Triisopropanolamin besprüht und entsprechend Beispiel 1 mikronisiert (vgl. Tabelle 1).

Analyse:
$TiO_2$ 96,9%; Glühverlust 0,8%; C 0,31%; Glühverlust – C 0,49%; Trockenverlust 0,18%.

Tabelle 1

| Lfd. Nr. | gemäß Beispiel | Grindometerwert (μ) | Hegman-Wert | Glanz (%) |
|---|---|---|---|---|
| 1 | 1 | 10 | 7,2 | 81 |
| 2 | A | 60 | 3,2 | 55 |
| 3 | B | 100 | 0,0 | 40 |
| 4 | C | 80 | 1,6 | 40 |
| 5 | D | 10 | 7,2 | 74 |
| 6 | E | 10 | 7,2 | 83 |
| 7 | 2 | 25 | 6,0 | 76 |
| 8 | 3 | 10 | 7,2 | 75 |
| 9 | 4 | 10 | 7,2 | 78 |
| 10 | 5 | 15 | 6,8 | 68 |
| 11 | 6 | 10 | 7,2 | 82 |
| 12 | 7 | 10 | 7,2 | 78 |
| 13 | 8 | 10 | 7,2 | 82 |
| 14 | 9 | 20 | 6,4 | 80 |
| 15 | 10 | 10 | 7,2 | 80 |

**Patentansprüche**

1. $TiO_2$-Pigmente mit einer gemeinsamen Beschichtung aus hydrophobierenden und hydrophilierenden organischen Substanzen mit einem Grindometerwert von kleiner als 30, entsprechend einem Wert von größer als 5,6 auf der Hegman-Skala wobei nur ein Anteil von 1—40 Gew.-%, vorzugsweise 5—30 Gew.-%, des organisch beschichteten Pigments aus anorganisch nachbehandeltem Pigment besteht, die $TiO_2$-Pigmente mehr als 95 Gew.-% $TiO_2$ enthalten und einen Glühverlust von weniger als 0,8% (nach Abzug des Kohlenstoffgehaltes) aufweisen.

2. $TiO_2$-Pigmente gemäß Anspruch 1, dadurch gekennzeichnet, daß die hydrophobierenden organischen Verbindungen in der Beschichtung siliciumorganische und/oder phosphororganische Verbindungen sind.

3. $TiO_2$-Pigmente gemäß Anspruch 2, dadurch gekennzeichnet, daß die siliciumorganischen Verbindungen Polysiloxane sind.

4. $TiO_2$-Pigmente gemäß Anspruch 2, dadurch gekennzeichnet, daß die phosphororganischen Verbindungen Phosphorsäure-di-ester sind.

5. $TiO_2$-Pigmente gemäß Anspruch 1, dadurch gekennzeichnet, daß die hydrophilierenden organischen Verbindungen Aminoalkohole sind.

6. $TiO_2$-Pigmente gemäß einem der Ansprüche 1 bis 5, die mehr als 95 Gew.-% $TiO_2$ enthalten, einen Glühverlust von weniger als 0,8% (ohne Berücksichtigung des Kohlenstoffgehaltes) aufweisen, mit einem Grindometerwert von kleiner als 30, entsprechend einem Wert von größer als 5,6 auf der Hegman-Skala, hergestellt durch gemeinsame Mikronisierung eines anorganisch nachbehandelten $TiO_2$-Pigmentes in Mengen von 1—40 Gew.-%, vorzugsweise 5—30 Gew.-%, bezogen auf die Gesamtmenge des $TiO_2$-Pigments, mit einem unbehandelten $TiO_2$-Pigment und Zugabe von hydrophobierenden und hydrophilierenden organischen Substanzen in Mengen von 0,3 bis 5 Gew.-%, vorzugsweise 0,5—1,5 Gew.-%, bezogen auf das Gewicht des Pigmentes, vor oder während der Mikronisierung.

7. $TiO_2$-Pigment gemäß Anspruch 6, dadurch gekennzeichnet, daß das anorganisch nachbehandelte $TiO_2$-Pigment ein mit 1—20 Gew.-%, vorzugsweise 3—15 Gew.-%, bezogen auf $TiO_2$, an anorganischen Metalloxiden, -hydroxiden und/oder -phosphaten nachbehandeltes $TiO_2$-Pigment ist.

8. Verfahren zur Herstellung von $TiO_2$-Pigmenten gemäß einem der Ansprüche 1 bis 7, dadurch gekennzeichnet, daß ein $TiO_2$-Pigment ohne anorganisch-chemische Nachbehandlung mit einem anorganisch nachbehandelten $TiO_2$-Pigment gemeinsam mikronisiert wird und hydrophobierende und hydrophilierende Substanzen vor oder während der Mikronisierung zugesetzt werden.

9. Verwendung der $TiO_2$-Pigmente gemäß einem der Ansprüche 1 bis 8 zur Pigmentierung von Lacken, Kunststoffen und Papier.

## Claims

1. $TiO_2$ pigments which have a combined coating of hydrophobicising and hydrophilicising organic substances and a grindometer value smaller than 30, corresponding to a value of more than 5.6 on the Hegman scale, wherein only a portion of 1–40% by weight, preferably 5–30% by weight, of the organically coated pigment consists of an inorganically after-treated pigment, and the $TiO_2$ pigments contain more than 95% by weight of $TiO_2$ and have a loss on annealing of less than 0.8% (after subtraction of the carbon content).

2. $TiO_2$ pigments according to Claim 1, characterised in that the hydrophobicising organic compounds in the coating are organic silicon compounds and/or organic phosphorus compounds.

3. $TiO_2$ pigments according to Claim 2, characterised in that the organic silicon compounds are polysiloxanes.

4. $TiO_2$ pigments according to Claim 2, characterised in that the organic phosphorus compounds are phosphoric acid diesters.

5. $TiO_2$ pigments according to Claim 1, characterised in that the hydrophilicising organic compounds are amino alcohols.

6. $TiO_2$ pigments according to one of Claims 1 to 5, which contain more than 95% by weight of $TiO_2$, have a loss on annealing of less than 0.8% (not taking into account the carbon content), and have a grindometer value smaller than 30, corresponding to a value of more than 5.6 on the Hegman scale, prepared by the micronisation of an inorganically after-treated $TiO_2$ pigment in quantities of 1–40% by weight, preferably 5–30% by weight, based on the total quantity of the $TiO_2$ pigment, together with an untreated $TiO_2$ pigment and the addition of hydrophobicising and hydrophilicising organic substances in quantities of 0.3 to 5% by weight, preferably 0.5–1.5% by weight, based on the weight of the pigment, before or during micronisation.

7. $TiO_2$ pigment according to Claim 6, characterised in that the inorganically after-treated $TiO_2$ pigment is a $TiO_2$ pigment which has been after-treated with 1–20% by weight, preferably 3–15% by weight, based on $TiO_2$, of inorganic metal oxides, hydroxides and/or phosphates.

8. Process for the preparation of $TiO_2$ pigments according to one of Claims 1 to 7, characterised in that a $TiO_2$ pigment which has not been inorganically chemically after-treated is micronised together with an inorganically after-treated $TiO_2$ pigment and hydrophobicising and hydrophilicising substances are added before or during micronisation.

9. Use of the $TiO_2$ pigments according to one of Claims 1 to 8 für pigmenting lacquers, plastics materials and paper.

## Revendications

1. Pigments au $TiO_2$ portant un revêtement commun de substances organiques conférant le caractère hydrophobe et le caractère hydrophile, ayant une finesse de broyage inférieure à 30, correspondant à une valeur supérieure à 5,6 dans l'échelle d'Hegman, une proportion de 1–40% en poids, de préférence de 5–30% en poids seulement du pigment à revêtement organique étant formée de pigment ayant reçu un traitement inorganique subséquent, les pigments au $TiO_2$ contenant plus de 95% en poids de $TiO_2$ et ayant une perte au feu de moins de 0,8% (déduction faite de la teneur en carbone).

2. Pigments au $TiO_2$ suivant la revendication 1, caractérisés en ce que les composés organiques conférant le caractère hydrophobe contenus dans le revêtement sont des composés organo-siliciques et/ou organo-phosphorés.

3. Pigments au $TiO_2$ suivant la revendication 2, caractérisés en ce que les composés organo-siliciques sont des polysiloxanes.

4. Pigments au $TiO_2$ suivant la revendication 2, caractérisés en ce que les composés organo-phosphorés sont des diesters de l'acide phosphorique.

5. Pigments au $TiO_2$ suivant la revendication 1, caractérisés en ce que les composés organiques conférant le caractère hydrophile sont des amino-alcools.

6. Pigments au $TiO_2$ suivant l'une des revendications 1 à 5, qui contiennent plus de 95% en poids de $TiO_2$, qui ont une perte au feu de moins de 0,8% (sans tenir compte de la teneur en carbone), une finesse de broyage de moins de 30, correspondant à une valeur supérieure à 5,6 dans l'échelle d'Hegman, préparés par micronisation commune d'un pigment au $TiO_2$ ayant subi un traitement

inorganique subséquent en quantités de 1 à 40% en poids, de préférence de 5 à 30% en poids par rapport à la quantité totale de pigment au $TiO_2$, avec un pigment au $TiO_2$ non traité et l'addition de substances organiques conférant le caractère hydrophobe et le caractère hydrophile en quantités de 0,3 à 5% en poids, de préférence de 0,5 à 1,5% par rapport au poids du pigment, avant ou pendant la micronisation.

7. Pigment au $TiO_2$ suivant la revendication 6, caractérisé en ce que le pigment au $TiO_2$ ayant subi un traitement inorganique subséquent est un pigment au $TiO_2$ ayant subi un traitement subséquent avec 1—20% en poids, de préférence 3—15% en poids par rapport à $TiO_2$, d'oxydes, d'hydroxydes et/ou de phosphates métalliques inorganiques.

8. Procédé de production de pigments au $TiO_2$ selon l'une des revendications 1 à 7, caractérisé en ce qu'un pigment au $TiO_2$ est micronisé sans post-traitement chimique inorganique en commun avec un pigment au $TiO_2$ ayant subi un post-traitement inorganique et des substances conférant le caractère hydrophobe et le caractère hydrophile sont ajoutées avant ou pendant la micronisation.

9. Utilisation des pigments au $TiO_2$ suivant l'une des revendications 1 à 8 pour la pigmentation de laques, de matières plastiques et de papier.